(19) Europäisches Patentamt

European Patent Office

Office européen des brevets

(11) **EP 1 123 737 A1**

(12) **EUROPÄISCHE PATENTANMELDUNG**

(43) Veröffentlichungstag:
16.08.2001 Patentblatt 2001/33

(51) Int Cl.⁷: **B01J 19/32**, B01J 35/06

(21) Anmeldenummer: 01102777.8

(22) Anmeldetag: 08.02.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.02.2000 DE 10005663**

(71) Anmelder: **BASF AKTIENGESELLSCHAFT**
**67056 Ludwigshafen (DE)**

(72) Erfinder:
• **Bröcker, Franz Josef Dr.**
  **67061 Ludwigshafen (DE)**

• Laib, Heinrich Dr.
  **67067 Ludwigshafen (DE)**
• Rohrbacher, Gerd
  **67069 Ludwigshafen (DE)**
• Schwab, Ekkehard Dr.
  **67434 Neustadt (DE)**
• Jansen, Helmut
  **41542 Dormagen (DE)**

(74) Vertreter: **Isenbruck, Günter, Dr.**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(54) **Herstellungsverfahren für eine Katalysatorpackung, Reaktor mit einer Katalysatorpackung sowie deren Verwendung**

(57)     Es wird eine Katalystorpackung sowie ein Herstellungsverfahren für eine Katalysatorpackung vorgeschlagen, wonach ein konfektioniertes Gewebe oder Gestrick in Form einer Endlos-Bandware durch Übereinanderlegen mehrerer Schichten zu einem Paket geformt und aus dem Paket Segmente (S) abgeschnitten werden, die zu einer oder mehreren den Reaktorquerschnitt vollständig ausfüllenden Lage(n) zusammengesetzt werden. Ein Reaktor mit einer derartigen Katalysatorpackung eignet sich insbesondere für katalytische Reaktionen, vorzugsweise für Hydrierungen, Selektivhydrierungen, Selektivoxidationen oder Isomerisierungen.

Fig. 1

EP 1 123 737 A1

**Beschreibung**

Die Erfindung betrifft eine Katalysatorpakkung, ein Herstellungsverfahren für eine Katalysatorpackung, einen Reaktor mit einer Katalysatorpackung sowie deren Verwendung.

Katalysatorpackungen sind zur Durchführung unterschiedlichster Fluidphasenreaktionen sowie auch für die Reinigung der Abgase von Brennkraftmaschinen und Industrieanlagen bekannt.

So beschreibt die DE-C-29 08 671 einen von Strömungskanälen durchzogenen Träger für Katalysatoren mit Querstromeffekt, aus aufeinander angeordneten Lagen eines Siebgewebes aus Stahl mit verbesserten Stützprofilen in der Trägermatrix.

Die DE-C-44 11 302 beschreibt ein Verfahren zur Herstellung eines monolythischen Trägerkatalysators in Form eines beschichteten, gasdurchlässigen Formkörpers. Auch diese Katalysatorpackung weist Strömungskanäle in Richtung des Eduktflusses auf.

Die EP-B-433 223 beschreibt einen Katalysatorkörper mit einer Trägerstruktur aus aufeinander gestapelten Schichten aus Stahlblechen oder aus einem Vollkeramikmaterial, wobei die Schichten in Hauptströmungsrichtung angeordnet sind und aufgrund wellen- oder zickzackförmiger Profilierung geradlinige, gegeneinander offene sowie sich kreuzende Strömungskanäle ausbilden. Auch diese Katalysatorkörper weisen somit Strömungskanäle in Richtung des Eduktflusses auf.

Die bekannten Katalysatorpackungen sind monolithische, strukturierte Packungen, die Strömungskanäle in Richtung des Eduktflusses aufweisen. Sollen Reaktionen in der Gasphase, insbesondere unter erhöhten Drücken, gefahren werden, führt dies bei den bekannten Katalysatorpackungen zur Ausbildung laminarer Strömungen und dadurch zu einem Schlupf an nicht umgesetzten Edukten.

Demgegenüber ist es Aufgabe der Erfindung, eine Katalysatorpackung zur Verfügung zu stellen, die die beschriebenen Nachteile nicht aufweist.

Die Erfindung geht aus von einer Katalysatorpackung für einen Reaktor mit einer oder mehreren, den Reaktorquerschnitt vollständig ausfüllenden Lage(n) aus mehreren übereinandergelegten Schichten eines konfektionierten Gewebes oder Gestrickes, in Form einer Endlos-Bandware.

Die Lösung ist dadurch gekennzeichnet, daß die Schichten senkrecht zur Hauptströmungsrichtung im Reaktor angeordnet sind, und daß eine Lage aus mindestens 3 Segmenten gebildet ist.

Die Verfahrensaufgabe wird durch ein Herstellungsverfahren gelöst, wonach ein konfektioniertes Gewebe oder Gestrick in Form einer Endlos-Bandware durch Übereinanderlegen mehrerer Schichten desselben zu einem Paket geformt wird und aus dem Paket Segmente abgeschnitten werden, die zu einer oder mehreren, den Reaktorquerschnitt vollständig ausfüllenden Lage(n) zusammengesetzt werden.

Das erfindungsgemäße Herstellungsverfahren gewährleistet eine kostengünstige, insbesondere zeit- und materialsparende Herstellungsweise und führt zu einer Katalysatorpackung, die keinerlei Vorzugsrichtung für den Eduktfluß aufweist und somit eine verbesserte Reaktionsführung, insbesondere bezüglich der Selektivität sowie der Katalysatorstandzeit, ermöglicht.

Insbesondere ermöglicht es, in wirtschaftlich vorteilhafter Weise, aus einer Endlos-Bandware eine Katalysatorpackung praktisch ohne Verschnitt und insbesondere praktisch ohne Verlust an teurer Aktivkomponente, die zuvor auf die Endlos-Bandware aufgebracht wurde, zur Verfügung zu stellen.

Darüber hinaus wird eine Katalysatorpackung zur Verfügung gestellt, die insbesondere in große Reaktoren, mit, sofern sie zylindrisch sind, einem Durchmesser im Bereich von ca. 50 bis 5000 mm, bevorzugt von 1000 bis 2500 mm, aufweisen, in einfacher Weise, in der Regel über Mannlöcher, ein- und ausgebaut werden können.

Für die Herstellung der erfindungsgemäßen Katalysatorpackung wird von bekannten Katalysatorträgern in Form eines Gewebes oder eines Gestrickes, das als Endlos-Bandware vorliegt, ausgegangen. Als Trägermaterialien eignen sich insbesondere Metalle, beispielsweise Edelstähle, aber auch anorganische Materialien, wie Keramik, Aluminiumoxid und/oder Siliziumdioxid, andere Asbestersatzstoffe, wie auch Kunststoffe, beispielsweise Polyamide, Polyester, Polyvinyle, Polyethylen, Polypropylen oder Polytetrafluorethylen, oder auch Kohlenstoff.

Auf das Trägergestrick oder-Gewebe werden anschließend in bekannter Weise die Aktivkomponenten aufgebracht, beispielsweise nach der besonders geeigneten, in EP-A- 0 564 830 beschriebenen Methode. Danach werden Metallgewebe, bevorzugt Edelstähle zunächst bei Temperaturen von 600 bis 1100°C, vorzugsweise von 800 bis 1000°C eine bis 20, vorzugsweise eine bis 10 Stunden an der Luft erhitzt und anschließend wieder abgekühlt. Durch diese entscheidende thermische Vorbehandlung wird diese Katalysatoraktivität wesentlich verbessert. Anschließend wird die Beschichtung mit Aktivkomponenten bei erhöhter Temperatur durchgeführt. Hierzu wird der Katalysatorträger im Vakuum bei einem Druck von $10^{-3}$ bis $10^{-8}$ mbar mittels einer Verdampfungseinrichtung, beispielsweise Elektronenstrahlverdampfung oder Sputtervorrichtung mit den Aktivkomponenten und Promotoren gleichzeitig oder nacheinander diskontinuierlich oder kontinuierlich beschichtet. Eine Temperung unter Inertgas kann nachgeschaltet werden.

Die Aktivkomponenten und Promotoren werden je nach beabsichtigtem Einsatzzweck entsprechend ausgewählt. Für Hydriererreaktionen eignen sich insbesondere Elemente der 8. Gruppe des Periodensystems, wie Fe, Co, Ni, Ru, Rh, Pd, Pt und Ir. Als Promotoren für Hydrierreaktionen können u.a. Cu, Ag, Au, Zn, Sn, Bi oder Sb dienen.

Das Verfahren zur Aufbringung von Aktivkomponenten und Promotoren auf den Katalysatorträger ist jedoch nicht auf die Vakuumschichtung beschränkt. Es kann im Gegenteil grundsätzlich jedes Verfahren hierfür eingesetzt werden. Es ist beispielsweise möglich, die Aktivkomponenten durch Tränken mit Lösungen der entsprechenden Salze auf den Katalysatorträger aufzubringen. Auch eine Sol-Gel- Tränkung ist möglich. Anschließend wird getrocknet und gegebenenfalls calciniert.

Das beschichtete Gewebe oder Gestrick liegt als Endlos-Bandware vor, bevorzugt in der Breite von 50 bis 500 mm, insbesondere von 100 bis 300 mm.

Unter dem Begriff Endlos-Bandware wird vorliegend ein theoretisch endloses, praktisch in einer handhabbaren Länge, im Bereich von 10 bis 2000 m, bevorzugt von 50 bis 300 m vorliegende Endlos-Bandware, verstanden.

Die Endlos-Bandware wird konfektioniert, d.h. verformt, insbesondere mittels Zahnradwalzen gewellt oder gesickt.

Die Endlos-Bandware aus konfektioniertem Gewebe oder Gestrick wird nunmehr in übereinanderliegenden Schichten angeordnet, wobei ein Paket gebildet wird, bevorzugt mit einer Dicke von 40 bis 400 mm, insbesondere von 100 bis 250 mm. Das Übereinanderlegen der Endlos-Bandware erfolgt bevorzugt durch Falten der theoretisch Endlos-Bandware mit der Folge, daß jeweils übereinanderliegende Schichten in einem Paket gegeneinander um 180° verdreht sind.

Die Länge des Paketes ist grundsätzlich nicht begrenzt, es empfiehlt sich jedoch, eine leicht handhabbare Länge zu wählen.

Aus dem Paket werden nunmehr Segmente abgeschnitten und zu einer oder mehreren, den Reaktorquerschnitt vollständig ausfüllenden Lage(n) zusammengesetzt. Dabei sind die übereinandergelegten Schichten der Endlos-Bandware erfindungsgemäß senkrecht zur Hauptströmungsrichtung im Reaktor angeordnet und eine Lage ist aus mindestens 3 Segmenten gebildet.

Eine derartige Katalysatorpackung weist keinerlei Vorzugsrichtung für das Reaktionsfluid auf und verhindert oder reduziert zumindest weitgehend den Schlupf von nicht umgesetzten Edukten.

Bevorzugt ist die Katalysatorpackung so ausgebildet, daß jeweils an ihren rechtwinkligen Stirnflächen aneinander angrenzende Segmente (S) in Bezug auf die rechtwinklige Stirnfläche zueinander symmetrisch angeordnet sind.

In besonders geeigneter Weise wird die Schnittführung zur Abtrennung der Segmente aus dem Paket wie folgt gelegt:

a) ein erstes Segment mit der Länge gleich dem doppelten Reaktorradius oder ein erstes Segmentpaar mit der Länge gleich dem Reaktorradius zum mittigen Einlegen in den Reaktorquerschnitt wird durch rechtwinklige Schnittführung abgetrennt,
b) zwei weitere Segmentpaare mit jeweils der Länge $2 \cdot l_1$, wobei

$$l_1 = \sqrt{r^2 - x^2},$$

r = Reaktorinnenradius und x = Bandbreite des Pakets,
werden durch rechtwinklige Schnittführung abgetrennt und anschließend durch einen Schrägschnitt entlang der Tangenten an den Reaktorinnenkreis in einem Punkt $T_1$, der von der Längsachse des ersten Segments um x beabstandet ist, in jeweils zwei geometrisch gleiche Segmente geteilt , zum Einlegen beidseitig des ersten, mittigen Segments und
c) gegebenenfalls werden weitere Segmentpaare, jeweils in doppelter Anzahl entsprechend der Schnittführung zu b) mit einer Länge $2 \, 1_i$, mit i = natürliche Zahl, $i \geq 2$ abgetrennt, wobei

$$l_i = \sqrt{r^2 - i \cdot x^2}$$

und wobei der Punkt T;, in dem die Tangente an den Reaktorinnenkreis gelegt wird, jeweils um i mal x von der Längsachse des ersten, mittigen Segments beabstandet ist, und
d) zur Ausfüllung der beiden Randspalten werden Segmente analog zu a), b) und c) aus dem Paket abgetrennt, jedoch zum Einlegen in einem Winkel von 90° verdreht zu den bereits eingelegten Segmenten.

Die erfindungsgemäße Schnittführung ist besonders kostengünstig, insbesondere arbeitszeit- und materialsparend.

Im Verfahrensschritt b) und ggf. c) werden somit jeweils Gruppen von 4 untereinander geometrisch gleichen Segmenten erhalten, die in geeigneter Weise in den Reaktorquerschnitt dergestalt eingelegt werden, daß eine den Reaktorquerschnitt vollständig ausfüllende Lage erhalten wird.

Da die Segmente etwas größer sind als der entsprechende Kreisbogen, sich aber aufgrund der Flexibilität des Gewebes bzw. Gestrickes gut in den Reaktor einfügen lassen, wird der Reaktorquerschnitt vollständig ausgefüllt und jeglicher Schlupf an der Reaktorwand verhindert. Durch den guten, direkten Kontakt der Katalysatorlage mit der Reaktorwand wird zusätzlich der Wärmeübergang deutlich verbessert.

Die analoge Anwendung der Verfahrensschritte a), b) und c) zur Ausfüllung des Randspaltes entsprechend Verfahrensschritt d) geht von einer ersten, größten Länge $2 \cdot l_q$ aus, wonach entsprechend Verfahrensschritt a) ein erstes, mittig einzulegendes Segment, nunmehr senkrecht zum ersten Segment entsprechend Verfahrensschritt a) hergestellt wird. Zwecks Ausfüllung der beiden Randspalten muß dieses Segment halbiert werden. Die Länge $l_q$ errechnet sich aus der Formel

$$l_q = r - (i + \tfrac{1}{2}) \cdot x,$$

wobei r, i und x die vorhin angeführten Bedeutungen haben.

Bevorzugt sind im Reaktor ein oder mehrere, insbesondere miteinander und/oder der Reaktorinnenwand verbundene Roste zur Aufnahme der Lage(n) angeordnet. Auf einem Rost können eine oder mehrere, insbesondere 1 bis 6, bevorzugt 2 bis 4 Lage(n) angeordnet sein. Dabei gibt es keine Beschränkungen bezüglich der Positionierung der Lagen im Reaktor und/ oder zueinander. Die Lagen können insbesondere mit Abstand zueinander, der grundsätzlich nicht beschränkt ist, jedoch auch unter vollständiger Ausfüllung des Reaktors eingebracht werden.

Besonders bevorzugt werden die in Reaktorlängsrichtung übereinander angeordneten Segmente zweier aufeinanderfolgender Lagen jeweils gegeneinander verdreht, insbesondere um einen Winkel von 45° verdreht, angeordnet. Dadurch wird der Ausbildung von Strömungskanälen in Richtung des Eduktflusses besonders gut entgegengewirkt.

Erfindungsgemäß wird insbesondere eine Katalysatorpackung für einen zylindrischen Reaktor zur Verfügung gestellt, es ist grundsätzlich jedoch auch möglich, Reaktoren mit nicht kreisförmigem Querschnitt, beispielsweise quaderförmige Reaktoren entsprechend mit Katalysatorpackungen zu bestücken.

Die erfindungsgemäße Katalysatorpackung ist besonders für zur Durchführung von katalytischen Reaktionen, bevorzugt von Hydrierungen, Selektivhydrierungen, Selektivoxidationen oder Isomerisierungen, geeignet.

Die Erfindung wird im folgenden anhand einer Zeichnung und eines Ausführungsbeispiels näher erläutert.

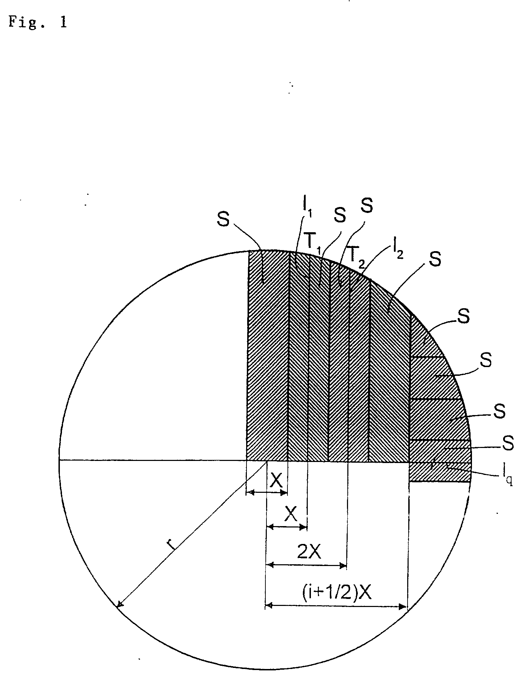

Die einzige Figur zeigt schematisch einen Querschnitt durch einen Reaktor mit erfindungsgemäßer Katalysatorpackung, wobei zwecks besserer Übersichtlichkeit, lediglich ein Viertel einer, den Reaktorquerschnitt vollständig ausfüllenden Katalysatorlage dargestellt ist. In der Figur ist mit r der Reaktorinnenradius, mit x die Bandbreite des Gewebes oder Gestrickes und somit die Bandbreite des Pakets, wie auch jedes Segments,

mit $l_1$ die halbe Länge des 2. Segmentpaares,
mit $l_2$ die halbe Länge des 3. Segmentpaares und
mit $l_q$ die halbe Länge des mittig in jeden der zwei Randspalten einzusetzenden Segments bezeichnet. $T_1$ bzw. $T_2$ bezeichnen die Punkte auf dem Reaktorinnenkreis, in denen jeweils die Tangenten für die Schnittführung zu legen sind.

**Ausführungsbeispiel:**

Ein zylindrischer Hydrierreaktor mit einem Reaktorinnendurchmesser von 1400 mm und einem Volumen von 4 $m^3$ wurde mit einer erfindungsgemäßen Katalysatorpackung vollständig befüllt. Eine Lage bestand aus jeweils 5 Segmenten, zusätzlich aus die beiden Randspalten ausfüllende Segmente. Die Bandbreite betrug 200 mm und die Höhe des Pakets 110 mm. Der Reaktor wurde zur Selektiv-Hydrierung von MAPD Methylacetylen und Propadien im Propenstrom eines Steamcrackers eingesetzt, bei einer Katalysatorbelastung von 3o t Propen/h. Die Gesamtlaufzeit betrug ca 1 Jahr. Dadurch wurde eine Selektivität von weit über 95% sowie eine Verdreifachung der Katalysatorstandzeit gegenüber einem herkömmlichen Hydrierreaktor, mit Kugelschüttung der Katalysatorformkörper, erreicht.

**Patentansprüche**

1. Katalysatorpackung für einen Reaktor mit einer oder mehreren, den Reaktorquerschnitt vollständig ausfüllenden Lage(n) aus mehreren übereinandergelegten Schichten eines konfektionierten Gewebes oder Gestrickes in Form einer Endlos-Bandware, dadurch gekennzeichnet, daß die Schichten senkrecht zur Hauptströmungsrichtung im Reaktor angeordnet sind und daß eine Lage aus mindestens drei Segmenten (S) gebildet ist.

2. Katalysatorpackung nach Anspruch 1, dadurch gekennzeichnet, daß jeweils an ihren rechtwinkligen Stirnflächen aneinander angrenzende Segmente (S) in Bezug auf die rechtwinklige Stirnfläche zueinander symmetrisch angeordnet sind.

3. Herstellungsverfahren für eine Katalysatorpackung nach Anspruch 1 oder 2, wonach ein konfektioniertes Gewebe oder Gestrick in Form einer Endlos-Bandware durch Übereinanderlegen mehrerer Schichten desselben zu einem Paket geformt wird, dadurch gekennzeichnet, daß aus dem Paket Segmente (S) abgeschnitten werden, die zu einer oder mehreren den Reaktorquerschnitt vollständig ausfüllenden Lage(n) zusammengesetzt werden.

4. Verfahren nach Anspruch 3, dadurch gekennzeichnet, daß jeweils übereinanderliegende Schichten in einem Paket gegeneinander um 180° verdreht sind.

5. Verfahren nach einem der Ansprüche 3 oder 4, dadurch gekennzeichnet, daß die Schnittführung zur Abtrennung der Segmente (S) aus dem Paket wie folgt gelegt wird:

   a) ein erstes Segment (S) mit der Länge gleich dem doppelten Reaktorradius oder ein erstes Segmentpaar mit der Länge gleich dem Reaktorradius zum mittigen Einlegen in den Reaktorquerschnitt wird durch rechtwinklige Schnittführung abgetrennt,

b) zwei weitere Segmentpaare mit jeweils der Länge $2.1_1$, wobei

$$l_1 = \sqrt{r^2 - x^2},$$

r = Reaktorinnenradius und x = Bandbreite des Pakets,

werden durch rechtwinklige Schnittführung abgetrennt und anschließend durch einen Schrägschnitt entlang der Tangenten an den Reaktorinnenkreis in einem Punkt $T_1$, der von der Längsachse des ersten Segments (S) um x beabstandet ist, in jeweils zwei geometrisch gleiche Segmente (S) geteilt, zum Einlegen beidseitig des ersten, mittigen Segments (S) und

c) gegebenenfalls werden weitere Segmentpaare, jeweils in doppelter Anzahl, entsprechend der Schnittführung zu b) mit einer Länge $2\,1_i$, mit i = natürliche Zahl, $i \geq 2$ abgetrennt, wobei

$$l_i = \sqrt{r^2 - i \cdot x^2}$$

und wobei der Punkt $T_i$, in dem die Tangente an den Reaktorinnenkreis gelegt wird, jeweils um i mal x von der Längsachse des ersten, mittigen Segments (S) beabstandet ist, und daß

d) zur Ausfüllung der beiden Randspalten Segmente (S) analog zu a), b) und c) aus dem Paket abgetrennt werden, jedoch zum Einlegen in einem Winkel von 90° verdreht zu den bereits eingelegten Segmenten (S).

6. Verfahren nach einem der Ansprüche 3 bis 5, dadurch gekennzeichnet, daß eine Endlos-Bandware mit einer Breite von 50 bis 500 mm, bevorzugt von 100 bis 300 mm eingesetzt wird.

7. Verfahren nach einem der Ansprüche 3 bis 6, dadurch gekennzeichnet, daß durch Übereinanderlegen der Endlos-Bandware ein Paket mit einer Dicke von 40 bis 400 mm, bevorzugt von 100 bis 250 mm hergestellt wird.

8. Verfahren nach einem der Ansprüche 3 bis 7, dadurch gekennzeichnet, daß im Reaktor ein oder mehrere vorzugsweise miteinander und/oder der Reaktorinnenwand verbundene(r) Rost(e) zur Aufnahme der Lage(n) angeordnet ist (sind).

9. Verfahren nach einem der Ansprüche 3 bis 8, dadurch gekennzeichnet, daß die in Reaktorlängsrichtung übereinander angeordneten Segmente (S) zweier aufeinanderfolgender Lagen jeweils gegeneinander verdreht, insbesondere um einen Winkel von 45° verdreht, angeordnet sind.

10. Verwendung einer Katalysatorpackung, hergestellt nach einem der Ansprüche 3 bis 9, für einen Reaktor für katalytische Reaktionen, insbesondere für Hydrierungen, Selektivhydrierungen, Selektivoxidationen oder Isomerisierungen.

Fig. 1

EP 1 123 737 A1

**Europäisches Patentamt**

**EUROPÄISCHER RECHERCHENBERICHT**

Nummer der Anmeldung

EP 01 10 2777

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 70 07 592 U (DR. HERMANN STAGE) 11. Juni 1970 (1970-06-11) * das ganze Dokument * --- | 1-3 | B01J19/32 B01J35/06 |
| X  Y | US 3 713 281 A (ASKER GUNNAR C F, HUBSCHER MAURICE A) 30. Januar 1973 (1973-01-30) * Spalte 2, Zeile 23 - Zeile 48 * * Spalte 2, Zeile 57 - Zeile 68 * * Spalte 3, Zeile 34 - Zeile 52 * * Spalte 5, Zeile 21 - Zeile 43 * * Ansprüche 1-4,14; Abbildung 7 * --- | 1,2  10 | |
| X  Y | US 4 501 707 A (BUEHLMANN ULRICH) 26. Februar 1985 (1985-02-26) * Spalte 6, Zeile 35 - Spalte 7, Zeile 36 * * Ansprüche 1,12; Abbildungen 9,10 * --- | 1,3,7  4-6,9,10 | |
| Y | US 2 470 652 A (SCOFIELD RAYMOND C) 17. Mai 1949 (1949-05-17) * Spalte 3, Zeile 37 - Spalte 4, Zeile 6 * * Spalte 6, Zeile 55 - Zeile 70 * * Spalte 7, Zeile 75 - Spalte 8, Zeile 47 * * Spalte 9, Zeile 51 - Zeile 73 * * Spalte 10, Zeile 65 - Zeile 73 * * Abbildungen 1,6 * --- | 4-6,9 | **RECHERCHIERTE SACHGEBIETE (Int.Cl.7)** B01J |
| X | US 3 785 620 A (HUBER M) 15. Januar 1974 (1974-01-15) * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 16. Mai 2001 | Vlassis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**

EP 01 10 2777

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2001

| Im Recherchenbericht angeführtes Patentdokument | | Datum der Veröffentlichung | Mitglied(er) der Patentfamilie | | Datum der Veröffentlichung |
|---|---|---|---|---|---|
| DE 7007592 | U | 11-06-1970 | KEINE | | |
| US 3713281 | A | 30-01-1973 | CA | 981574 A | 13-01-1976 |
| US 4501707 | A | 26-02-1985 | DE | 3266166 D | 17-10-1985 |
| | | | EP | 0069241 A | 12-01-1983 |
| | | | JP | 1488637 C | 23-03-1989 |
| | | | JP | 58011001 A | 21-01-1983 |
| | | | JP | 62034401 B | 27-07-1987 |
| US 2470652 | A | 17-05-1949 | KEINE | | |
| US 3785620 | A | 15-01-1974 | AU | 450762 B | 18-07-1974 |
| | | | AU | 4166972 A | 01-11-1973 |
| | | | CA | 975355 A | 30-09-1975 |
| | | | CA | 987300 A | 13-04-1976 |
| | | | CH | 537208 A | 13-07-1973 |
| | | | CH | 547120 A | 29-03-1974 |
| | | | CS | 167981 B | 28-05-1976 |
| | | | DE | 2205371 A | 16-11-1972 |
| | | | FR | 2134377 A | 08-12-1972 |
| | | | GB | 1373142 A | 06-11-1974 |
| | | | IT | 959596 B | 10-11-1973 |
| | | | JP | 54011543 B | 16-05-1979 |
| | | | NL | 7205821 A | 31-10-1972 |
| | | | US | 3871624 A | 18-03-1975 |

EPO FORM P0461

Für nähere Einzelheiten zu diesem Anhang : siehe Amtsblatt des Europäischen Patentamts, Nr.12/82